# EUROPEAN PATENT SPECIFICATION

(11) **EP 3 351 708 B1**
(45) Date of publication and mention of the grant of the patent: **01.01.2020**
(21) Application number: 18152824.1
(22) Date of filing: 22.01.2018
(51) Int. Cl.: B29C 41/00, B29C 63/02, B29C 63/30, E04H 4/00, B29C 70/00

(54) **METHOD FOR MAKING A SWIMMING POOL AND A SWIMMING POOL**
VERFAHREN ZUR HERSTELLUNG EINES SCHWIMMBECKENS UND SCHWIMMBECKEN
PROCÉDÉ DE FABRICATION D'UNE PISCINE ET PISCINE

(30) Priority: 23.01.2017 IT 201700006852
(43) Date of publication of application: 25.07.2018
(73) Proprietor: Mapi S.r.l., 25036 Palazzolo sull'Oglio (BS) (IT)
(72) Inventor: BUSETTI, Enio, 25036 Palazzolo sull'Oglio (BS) (IT)
(74) Representative: Long, Giorgio

(56) References cited:
- WO-A1-2006/084901
- WO-A1-2009/136748
- JP-A- 2001 207 466

## Description

The present invention relates to a method for the construction of a swimming pool, and a swimming pool e.g. obtainable through this method.

In the manufacture of swimming pools, it is known to use polyvinyl chloride (PVC) as a true construction material, or as a sheath of internal surfaces, so as to make the basins more resistant to algaecide chlorine dissolved in water.

It is however well known that the use of PVC entails considerable environmental and health problems, both in the production phase and in the disposal and recycling of swimming pools.

It follows that the attention of operators in this sector is increasingly oriented towards alternative technologies to the use of PVC, as it is not unreasonable to speculate that in the future this substance could be banned. Some alternative technologies of making swimming pools which form part of the relevant state of the art are disclosed in WO 2006/084901, WO 2009/136748 and JP 2001207466.

The present invention is placed in the preceding context, proposing to provide a swimming pool and a method for the construction of a swimming pool using an alternative coating material to PVC, in an act of responsibly avoiding the use of a substance that is harmful to animal and plant health.

Such objective is achieved through a manufacturing method according to claim 1, and through a swimming pool according to claim 9. The claims dependent thereon show preferred or advantageous embodiments.

The object of the present invention will now be described in detail, with the aid of the accompanying figures, wherein:
- figure 1 shows a perspective view of a swimming pool, object of the present invention, according to a possible embodiment;
- figure 2 diagrams a section through a wall of the pool in figure 1, according to one among different variants.

The aforesaid objective is achieved through a method for the construction of a swimming pool 1 comprising the steps of:
i) providing one or more pool walls 2, 4 demarcating a pool compartment 6;
ii) providing a coating material 10 for the pool wall 2, 4 (or said plurality of walls), such material consisting of an ethylene-vinyl-acetate (EVA) copolymer;
iii) applying at least one adhesion promoter layer 8, 8' to at least part of the abutment surfaces 12, 14 of the pool wall 2, 4 and of the coating material 10;
iv) superposing at least an adhesive layer 16 on at least one of the adhesion promoter layers 8, 8' of step iii);
v) cross-linking the adhesive layer 16 between the coating material 10 and the pool wall 2, 4 in mutual contact, so as to obtain said swimming pool 1.

According to one embodiment, the method consists exclusively of the aforementioned steps i) to v).

According to one embodiment, step i) comprises a step of building one or more pool walls 2, 4 in concrete or brick.

According to one embodiment, step i) comprises a step of building one or more pool walls 2, 4 in an underground position.

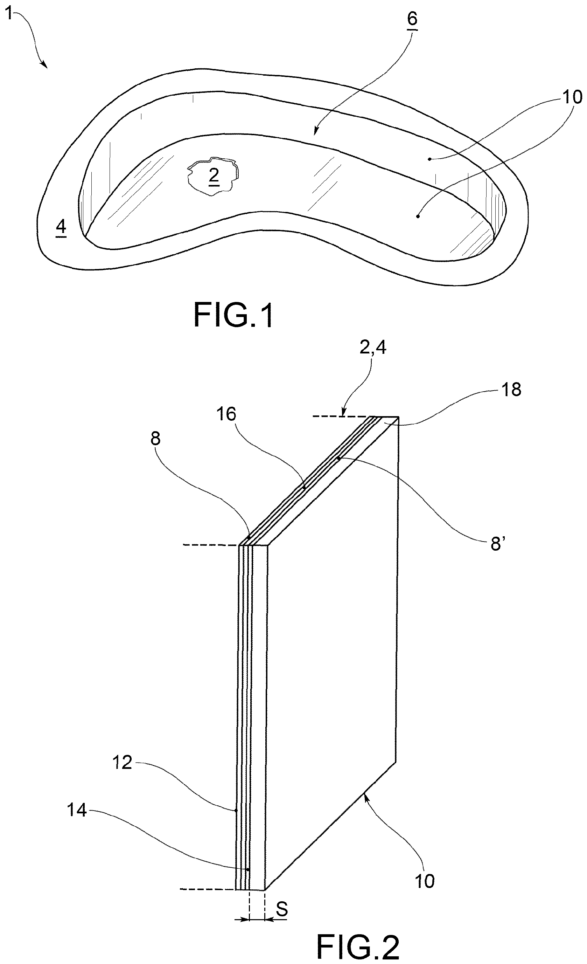

In this regard, the diagram of figure 1 shows how the pool wall 4 (and consequently also the pool compartment 6) extends beneath a surrounding surface 20, for example a peripheral or walking surface.

According to one embodiment, the percentage by weight of vinyl acetate in the coating material 10 is in the range 10-40 wt%, and such material consists of ethylene for the remaining percentage.

According to one embodiment, in step ii) the coating material 10 is in the form of a tape/film or mat 18 having a thickness S within the range 0.1 -2.5 mm, for example 1.0-2.5 mm;

According to one embodiment, in step ii) the covering material 10 is in the form of a tape/film or a mat 18 having a thickness S of less than 13 mm, for example less than 10 mm. Advantageously, according to this variant, such thickness S is greater than about 2.5 mm or greater than about 5 mm.

According to one embodiment, the adhesion promoter 8, 8' could comprise or consist of a mixture of tetrachloroethene, cyclohexane, propyl acetate.

According to one embodiment, the adhesion promoter 8, 8' could be the product known under the trade name "LAB.1364/A" of the Italian company MAPI S.r.l. (Palazzolo sull'Oglio - Brescia).

According to one embodiment, the adhesive layer 16 is polychloroprene-based.

According to a first variant, the polychloroprene is dissolved or suspended in an organic solvent.

According to a second variant, the polychloroprene is suspended or dispersed in an aqueous solvent, for example in water.

According to one embodiment, steps iii)-iv) comprise sub-steps of spray or brush application.

According to one embodiment, steps iii)-v) are conducted at ambient temperature, namely in the absence of heating, for example at a temperature in the range of 15-25°C.

According to one embodiment, step iii) provides for applying the layer on a prevalent or complete portion of the abutment surfaces 12, 14 of the pool wall 2, 4 and of the coating material 10.

According to one embodiment, step iv) provides to superpose the adhesive layer 16 to a prevalent or complete portion of the adhesion promoter layer 8, 8'.

According to one embodiment, step v) comprises a sub-step of juxtaposing a plurality of tapes/films in mutual superposition, and a subsequent sub-step of sealingly joining said tapes/films.

According to one embodiment, step v) comprises a sub-step of juxtaposing a plurality of mats 18 with a substantially zero overlap, a sub-step of placing a waterproofing substance in the gap between said mats 18, and a sub-step of sealingly joining said mats 18.

According to one embodiment, the waterproofing substance consists of the same material as the adhesive layer 16.

According to one embodiment, step v) is carried out for at least 15 minutes at ambient temperature (for example at a temperature in the range 15-25°C).

The present invention also relates to a swimming pool 1.

Since a preferred embodiment provides that such swimming pool is obtained through the method just illustrated, such swimming pool may comprise all the features deducible - even only implicitly - from the foregoing description.

The swimming pool 1 comprises or consists of:
i) one or more pool walls 2, 4 demarcating a pool compartment 6;
ii) a coating material 10 for such pool wall 2, 4 (or such plurality of walls), the aforesaid material consisting of an ethylene-vinyl-acetate (EVA) copolymer;
iii) at least one adhesion promoter layer 8, 8' applied on at least part of the abutment surfaces 12, 14 of the pool wall 2, 4 and of the coating material 10;
iv) at least one adhesive layer 16 superposed on at least one of the adhesion promoter layers 8, 8';
the adhesive layer 16 being cross-linked between the coating material 10 and the pool wall 2, 4 in mutual contact.

According to possible embodiments, implementable independently of each other:
- the coating material 10 is in the form of a tape/film or mat 18 having a thickness within the range 0.1 -2.5 mm, for example 1.0-2.5 mm;
- one or more pool walls 2, 4 are built of concrete or brick and/or in an underground position;
- the percentage by weight of vinyl-acetate in the coating material 10 is in the range of 10-40 wt%, and of ethylene for the remaining percentage; and/or
- the adhesive layer 16 is polychloroprene-based.

Innovatively, the method and swimming pool object of the present invention allow the drawbacks related to the prior art to be successfully resolved.

More precisely, the described method and the swimming pool allow the ecological and toxicological consequences linked to PVC to be avoided, but nevertheless use a material of at least the same versatility and strength.

Advantageously, the method and the swimming pool make it possible to use a softer material than PVC, thus being able to cushion - within certain limits related to the thickness of the material - possible shocks against the walls or edges of the pool.

Advantageously, the described method and swimming pool allow a swimming pool with a soft bottom wall to be obtained which, besides giving a pleasant sensation to the touch, is able to absorb shocks.

Advantageously, the method and the swimming pool object of the present invention allow an important energy savings to be obtained in the realization of the coating.

To the embodiments of the aforesaid method and swimming pool, a person skilled in the art, in order to meet specific needs, may make variants or substitutions of elements with others that are functionally equivalent.

These variants are also contained within the scope of protection as defined by the following claims.

Furthermore, each variant described as belonging to a possible embodiment may be achieved independently of the other variants described.

## Claims

1. Method of making a swimming pool (1) comprising steps of:
i) providing one or more pool walls (2, 4) demarcating a pool compartment (6);
ii) providing a coating material (10) for said pool wall (2, 4) or said plurality of walls, said material (10) consisting of an ethylene-vinyl-acetate (EVA) copolymer;
iii) applying at least one adhesion promoter layer (8, 8') on at least part of the abutment surfaces (12, 14) of the pool wall (2, 4) and of the coating material (10);
iv) superposing at least one adhesive layer (16) on at least one of the adhesion promoter layers (8, 8') of step iii) ;
v) cross-linking the adhesive layer (16) between the coating material (10) and the pool wall (2, 4) in mutual contact, so as to obtain said pool (1).

2. Method according to claim 1, wherein the coating material (10) is in the form of a tape/film or mat (18) having a thickness (S) within the range 0.1 -2.5 mm, for example 1.0-2.5 mm.

3. Method according to the preceding claim, wherein step v) comprises a sub-step of juxtaposing a plurality of tapes/films in mutual superposition, and a subsequent sub-step of sealingly joining said tapes/films.

4. Method according to claim 2, wherein step v) comprises a sub-step of juxtaposing a plurality of mats (18) with a substantially zero overlap, a sub-step of placing a waterproofing substance in the gap between said mats (18), and a sub-step of sealingly joining said mats (18) .

5. Method according to any of the preceding claims, wherein step i) comprises a step of building one or more pool walls (2, 4) in an underground position, in concrete or in brick.

6. Method according to any of the preceding claims, wherein:
- steps iii)-iv) comprise sub-steps of spraying or brushing; and
- steps iii)-v) are conducted at ambient temperature, namely in the absence of heating, for example at a temperature in the range of 15-25° C.

7. Method according to any preceding claim, wherein the percentage by weight of vinyl-acetate in the coating material (10) is in the range of 10-40 wt%, and of ethylene for the remaining percentage.

8. Method according to any of the preceding claims, wherein:
- step v) is conducted for at least 15 minutes at ambient temperature; and/or
- the adhesive layer (16) is polychloroprene-based.

9. Swimming pool (1) comprising:
i) one or more pool walls (2, 4) demarcating a pool compartment (6);
ii) a coating material (10) for said pool wall (2, 4) or said plurality of walls, said material (10) consisting of an ethylene-vinyl-acetate (EVA) copolymer;
iii) at least one adhesion promoter layer (8, 8') applied on at least part of the abutment surfaces (12, 14) of the pool wall (2, 4) and of the coating material (10);
iv) at least one adhesive layer (16) superposed on at least one of the adhesion promoter layers (8, 8');
v) the adhesive layer (16) being cross-linked between the coating material (10) and the pool wall (2, 4) in mutual contact.

10. Swimming pool according to the preceding claim, wherein
- the coating material (10) is in the form of a tape/film or mat (18) having a thickness within the range 0.1 -2.5 mm, for example 1.0-2.5 mm;
- one or more pool walls (2, 4) are built of concrete or brick, in an underground position;
- the percentage by weight of vinyl-acetate in the coating material (10) is in the range of 10-40 wt%, and of ethylene for the remaining percentage; and/or
- the adhesive layer (16) is polychloroprene-based.

## Patentansprüche

1. Verfahren zum Herstellen eines Swimming Pools (1), umfassend die Schritte:
i) Bereitstellen einer oder mehrerer Poolwände (2, 4), die einen Poolraum (6) abgrenzen;
ii) Bereitstellen eines Beschichtungsmaterials (10) für die Poolwand (2, 4) oder die Mehrzahl von Wänden, wobei das Material (10) aus einem Ethylen-Vinylacetat (EVA)-Copolymer besteht;
iii) Aufbringen zumindest einer Haftvermittlerschicht (8, 8') auf zumindest einen Teil der Anlageflächen (12, 14) der Poolwand (2, 4) und des Beschichtungsmaterials (10);
iv) Überlagern zumindest einer Haftschicht (16) auf zumindest einer der Haftvermittlerschichten (8, 8') aus Schritt iii);
v) Vernetzen der Haftschicht (16) zwischen dem Beschichtungsmaterial (10) und der Poolwand (2, 4) in gegenseitigem Kontakt, um den Pool (1) zu erhalten.

2. Verfahren nach Anspruch 1, wobei das Beschichtungsmaterial (10) in Form eines Bandes/Films oder einer Matte (18) mit einer Dicke (S) in dem Bereich von 0,1 bis 2,5 mm, beispielsweise 1,0 bis 2,5 mm, vorliegt.

3. Verfahren nach dem vorhergehenden Anspruch, wobei Schritt v) einen Unterschritt des Nebeneinanderanordnens einer Mehrzahl von Bändern/Filmen in gegenseitiger Überlagerung und einen anschließenden Unterschritt des dichtenden Verbindens der Bänder/Filme umfasst.

4. Verfahren nach Anspruch 2, wobei Schritt v) einen Unterschritt des Nebeneinanderanordnens einer Mehrzahl von Matten (18) mit einer Überlappung von im Wesentlichen Null und einen Unterschritt des Platzierens einer Hydrophobierungssubstanz in dem Spalt zwischen den Matten (18) sowie einen Unterschritt des dichtenden Verbindens der Matten (18) umfasst.

5. Verfahren nach einem der vorhergehenden Ansprüche, wobei Schritt i) einen Schritt des Errichtens einer oder mehrerer Poolwände (2, 4) in einer unterirdischen Position in Beton oder Ziegel umfasst.

6. Verfahren nach einem der vorhergehenden Ansprüche, wobei:
- die Schritte iii) -iv) Unterschritte des Sprühens oder Bürstens umfassen; und
- die Schritte iii) -v) bei Umgebungstemperatur durchgeführt werden, und zwar ohne Erhitzen, beispielsweise bei einer Temperatur in dem Bereich von 15-25 °C.

7. Verfahren nach einem der vorhergehenden Ansprüche, wobei der Gewichtsprozentsatz von Vinylacetat in dem Beschichtungsmaterial (10) in dem Bereich von 10 bis 40 Gew.-% und von Ethylen für den verbleibenden Prozentsatz liegt.

8. Verfahren nach einem der vorhergehenden Ansprüche, wobei:
- Schritt v) zumindest 15 Minuten bei Umgebungstemperatur durchgeführt wird; und/oder
- die Haftschicht (16) auf Polychloropren basiert.

9. Swimming Pool (1), umfassend:
i) eine oder mehrere Poolwände (2, 4), die einen Poolraum (6) abgrenzen;
ii) ein Beschichtungsmaterial (10) für die Poolwand (2, 4) oder die Mehrzahl von Wänden, wobei das Material (10) aus einem Ethylen-Vinylacetat (EVA)-Copolymer besteht;
iii) zumindest eine Haftvermittlerschicht (8, 8'), die auf zumindest einen Teil der Anlageflächen (12, 14) der Poolwand (2, 4) und des Beschichtungsmaterials (10) aufgebracht ist;
iv) zumindest eine Haftschicht (16), die auf zumindest einer der Haftvermittlerschichten (8, 8') überlagert ist;
v) wobei die Haftschicht (16) zwischen dem Beschichtungsmaterial (10) und der Poolwand (2, 4) in gegenseitigem Kontakt vernetzt ist.

10. Swimming Pool nach dem vorhergehenden Anspruch, wobei
- das Beschichtungsmaterial (10) in Form eines Bandes/Films oder einer Matte (18) mit einer Dicke in dem Bereich von 0,1 bis 2,5 mm, beispielsweise 1,0 bis 2,5 mm, vorliegt;
- eine oder mehrere Poolwände (2, 4) in einer unterirdischen Position in Beton oder Ziegel errichtet sind;
- der Gewichtsprozentsatz von Vinylacetat in dem Beschichtungsmaterial (10) in dem Bereich von 10 bis 40 Gew.-% und von Ethylen für den verbleibenden Prozentsatz liegt; und/oder
- die Haftschicht (16) auf Polychloropren basiert.

## Revendications

1. Procédé de fabrication d'une piscine (1) comprenant les étapes de :
i) fourniture d'une ou plusieurs parois de piscine (2, 4) délimitant un compartiment de piscine (6) ;
ii) fourniture d'un matériau de revêtement (10) pour ladite paroi de piscine (2, 4) ou ladite pluralité de parois, ledit matériau (10) étant constitué d'un copolymère d'éthylène-acétate de vinyle (EVA) ;
iii) application d'au moins une couche favorisant l'adhérence (8, 8') sur au moins une partie des surfaces d'aboutement (12, 14) de la paroi de piscine (2, 4) et du matériau de revêtement (10) ;
iv) superposition d'au moins une couche adhésive (16) sur au moins l'une des couches favorisant l'adhérence (8, 8') de l'étape iii) ;
v) réticulation de la couche adhésive (16) entre le matériau de revêtement (10) et la paroi de piscine (2, 4) en contact mutuel, de manière à obtenir ladite piscine (1).

2. Procédé selon la revendication 1, dans lequel le matériau de revêtement (10) se présente sous la forme d'un ruban/film ou tapis (18) ayant une épaisseur (S) dans la plage de 0,1 à 2,5 mm, par exemple de 1,0 à 2,5 mm.

3. Procédé selon la revendication précédente, dans lequel l'étape v) comprend une sous-étape de juxtaposition d'une pluralité de rubans/films en superposition mutuelle, et une sous-étape subséquente de jonction étanche desdits rubans/films.

4. Procédé selon la revendication 2, dans lequel l'étape v) comprend une sous-étape de juxtaposition d'une pluralité de tapis (18) avec un chevauchement pratiquement nul, une sous-étape de placement d'une substance imperméable à l'eau dans l'espace entre lesdits tapis (18), et une sous-étape de jonction étanche desdits tapis (18).

5. Procédé selon l'une quelconque des revendications précédentes, dans lequel l'étape i) comprend une étape de construction d'une ou de plusieurs parois de piscine (2, 4) dans une position souterraine, en béton ou en brique.

6. Procédé selon l'une quelconque des revendications précédentes, dans lequel :
- les étapes iii) à iv) comprennent des sous-étapes de pulvérisation ou de brossage ; et
- les étapes iii) à v) sont menées à température ambiante, à savoir en l'absence de chauffage, par exemple à une température dans la plage de 15 à 25 °C.

7. Procédé selon l'une quelconque des revendications précédentes, dans lequel le pourcentage en poids d'acétate de vinyle dans le matériau de revêtement (10) est dans la plage de 10 à 40 % en poids, et d'éthylène pour le pourcentage restant.

8. Procédé selon l'une quelconque des revendications précédentes, dans lequel :
- l'étape v) est menée pendant au moins 15 minutes à température ambiante ; et/ou
- la couche adhésive (16) est à base de polychloroprène.

9. Piscine (1) comprenant :
i) une ou plusieurs parois de piscine (2, 4) délimitant un compartiment de piscine (6) ;
ii) un matériau de revêtement (10) pour ladite paroi de piscine (2, 4) ou ladite pluralité de parois, ledit matériau (10) étant constitué d'un copolymère d'éthylène-acétate de vinyle (EVA) ;
iii) au moins une couche favorisant l'adhérence (8, 8') appliquée sur au moins une partie des surfaces d'aboutement (12, 14) de la paroi de piscine (2, 4) et du matériau de revêtement (10) ;
iv) au moins une couche adhésive (16) superposée sur au moins l'une des couches favorisant l'adhérence (8, 8') ;
v) la couche adhésive (16) étant réticulée entre le matériau de revêtement (10) et la paroi de piscine (2, 4) en contact mutuel.

10. Piscine selon la revendication précédente, dans laquelle
- le matériau de revêtement (10) se présente sous la forme d'un ruban/film ou tapis (18) ayant une épaisseur dans la plage de 0,1 à 2,5 mm, par exemple de 1,0 à 2,5 mm ;
- une ou plusieurs parois de piscine (2, 4) sont construites en béton ou en brique, dans une position souterraine ;
- le pourcentage en poids d'acétate de vinyle dans le matériau de revêtement (10) est dans la plage de 10 à 40 % en poids, et d'éthylène pour le pourcentage restant ; et/ou
- la couche adhésive (16) est à base de polychloroprène.
